# EUROPEAN PATENT APPLICATION

(11) **EP 3 562 088 A1**
(43) Date of publication of application: **30.10.2019**
(21) Application number: 18168645.2
(22) Date of filing: 23.04.2018
(51) Int. Cl.: H04L 9/08, H04B 10/70

(54) **DETECTOR DEAD TIME EFFECT IN QKD SYSTEMS**

(71) Applicant: ID Quantique S.A., 1227 Carouge (CH)
(72) Inventor: Legré, Matthieu, 74140 Veigy-Foncenex (FR)
(74) Representative: KATZAROV S.A.

(57) **Abstract**

The present relates to a QKD receiver (300-700) comprising an optical system (110), at least two detectors (120, 130, 220 230), a processing unit (140) and a buffer (170, 270), characterized in that the buffer (170, 270) is adapted to temporarily store an information that the receiver (300-700) sends back to the emitter via a service channel once one of the detectors receives quantum data, , so as to introduce a delay time into the communication process to assure that the communication restarts only after a deadtime of all the detectors (120, 130) has lapsed.

## Description

### Technical Field

The present invention relates to a Quantum Key Distribution system and more particularly to a Quantum Key Distribution system comprising a dead time effect detector.

### Background of the art

Quantum cryptography or Quantum Key Distribution (QKD) is a method allowing the distribution of a secret key between two distant parties, the emitter and the receiver, with a provable absolute security. QKD relies on quantum physics principles and encoding information in quantum states, or qubits, as opposed to classical communication's use of bits. Usually, photons are used for these quantum states. Quantum key distribution exploits certain properties of these quantum states to ensure its security.

More particularly, the security of this method comes from the fact that the measurement of a quantum state of an unknown quantum system modifies the system itself. In other words, a spy eavesdropping on a quantum communication channel cannot get information on the key without introducing errors in the key exchanged between the emitter and the receiver thereby informing the user of an eavesdropping attempt.

Different protocols can be implemented for performing QKD, each of them describing the principle of the communication exchanges. In particular, a proof of security of the protocols can be computed based on the principle of communication.

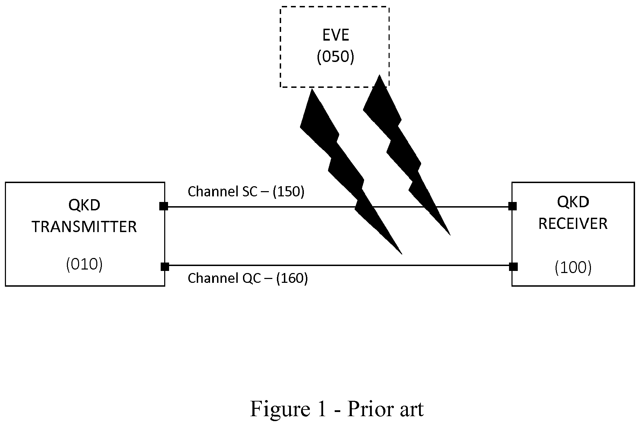

Figure 1 illustrates a conventional QKD apparatus consisting of 2 devices, respectively a QKD transmitter (or emitter) 010 and a QKD receiver 100 connected through 2 communication channels: a quantum channel 160 and a service channel 150. The quantum channel 160 is used to exchange the quantum bits or qubits between the emitter 010 and the receiver 100. From these exchanged qubits, a secret key shared between the emitter 010 and the receiver 100 can be distillated. This distillation process is composed of local data processing in each QKD apparatus, and of classical communications between these two boxes through the service channel 150. Usually, the key distillation works in four steps: the sifting step, the error correction, the privacy amplification and the authentication of the classical communications. The sifting step consists in the receiver 100 announcing the index of the qubits that have been detected and some additional information that is needed by the emitter 010 to accept or not the detected qubit. One of this additional information can be announcing which detector has detected the qubit. The apparatus is designed for implementing and executing, with the best possible accuracy, the instructions of the protocol, limiting the possibility of attacks from a general eavesdropper Eve 050.

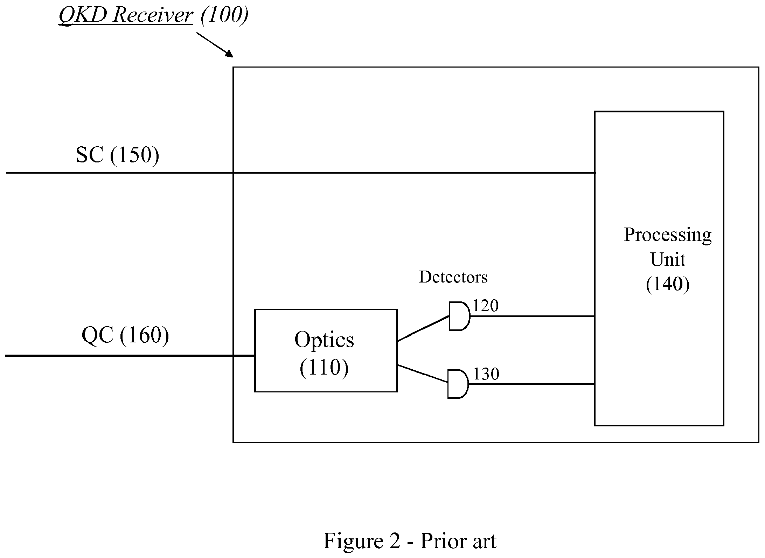

Figure 2 illustrates a conventional QKD receiver apparatus exploiting two detectors. The QKD receiver 100 comprises an optical system 110, two detectors 120, 130, and a processing unit 140. The receiver 100 is connected to the emitter (not shown in the figure) through a service channel 150, and a quantum channel 160. The processing unit 140 is used for the measurement of the qubits and the data processing occurring during the distillation of the secret keys.

In QKD protocols, the type of data transmitted on the service channel is clearly defined. In this way, the transmitter and the receiver can collaborate on the key exchange, and at the same time, avoid sending any critical information to a potential eavesdropper.

When security proofs are computed, some hypothesis on the state of each component of the QKD receiver and transmitter are made. A typical hypothesis - referring to QKD apparatus implementing several single photon detectors at the receiver's side - presupposes that when a quantum state is measured either all the detectors are active, or no eavesdropper knows when one or more detectors are inactive. For instance, if the system has two detectors, and the eavesdropper knows that one of them is inactive, it consequently knows on which detector a detection can occur. In this case, the eavesdropper might have an attack strategy that depends on which detector is active and which one is not, e.g. in the case of COW protocol [Appl. Phys. Lett. 87, 194108 (2005)] one detector (data detector) is used to generate the key whereas the other one (monitoring detector) is used to monitor the security of this key. If the eavesdropper knows that the monitoring detector is inactive, he can perform very efficient attacks that cannot be detected by the data detector.

Single photon detectors show a period of inactivity after each detection, such a period is named deadtime. If the deadtime of the detector is shorter than the time between two qubits, then the security of the communication is not affected. This is for example the case of QKD systems based on Si avalanche photodiodes.

On the contrary, InGaAs based single photon detectors show a long deadtime, typically about ∼ 10 µs. Consequently, several qubits might impinge the detector, when inactive. In this case, the situation previously described can occur, i.e. an eavesdropper can guess the detector where the detections might happen when he knows which one of the two detectors is inactive. The eavesdropper may know which detector is inactive by listen at the service channel 150 that is used by the receiver 100 to announce the detections during the sifting step of the distillation of the secret key.

According to prior art, one possible solution, to mitigate the mentioned problem, is to simultaneously apply the same deadtime to each InGaAs detector. This solution is already implemented in commercially available devices, such as Clavis2 and Clavis3 by ID Quantique SA.

Another solution has been proposed by H. Weiner et al., New Journal of Physics 13 (2011) 073024, for a quite complex attack taking advantage of the deadtime of Si detectors. It consists in considering the detections only when all detectors are simultaneously active. Their solution is suitable for Si detectors but is not efficient for InGaAs detectors. Indeed, the deadtime of InGaAs detectors are so long that the count rate of acceptable detections will be too much reduced.

The two described solutions are well suited for detectors controlled by one of the two device, i.e. the receiver. However, it is not possible to apply them to QKD systems implementing external detectors, where external means that detectors may be delivered by another company than the QKD provider (manufacturer). The external detectors can be connected to the QKD apparatus via an optical channel used for photons, and an electrical channel for detections.

In the case of external detectors, the QKD system cannot control them, and therefore it is not able to either apply a common deadtime, or guess if all detectors are active at detection's time.

If we summarize the situation, one sees that with current techniques, it is not possible to guarantee high level security of quantum key distribution performed by exploiting systems equipped with external detectors. Nevertheless, a QKD user may want to implement external detectors in order to enhance the QKD performances in terms of reliability, security, achieved distances and/or key rate.

Single photon detectors implemented in QKD systems for the communication between an emitter and a receiver are affected by deadtime effects. If the detectors are external, they can be different and experience a non-equivalent deadtime. Therefore, it can happen that the communication has restarted while one of the detectors is still affected by deadtime. In this case, the communication is not secure, and the data are exposed to eavesdropping.

In conclusion, by performing keys exchanges with external detectors, it might be possible to have detectors that experience different deadtime, and this results in a potential lower level of security.

It is therefore an object of the present invention to provide a device and a method permitting to control the deadtime effect of detectors in a QKD system. The present solution, which will be fully described and illustrated in the following sections, allows to perform QKD in total security even when using external detectors provided by users.

### Invention Summary

The general idea of the invention is a solution guarantying high level security of quantum key distribution systems equipped with external detectors.

Essentially, within the process of data communication between the QKD emitter and the QKD receiver, the potential periods of inactivity of one single photon detector compared to another one could affect the security of the QKD process, thus rendering the key exchange impractical. This effect of having a detector inactive whereas the other one is active is particularly true when the QKD system is made with two external detectors out of control from the QKD receiver. The eavesdropper can learn about this asymmetric detection situation by listening to the sifting information sent through the service channel.

At this purpose, we equip the receiver with an additional component, i.e. a buffer adapted to impose a delay time that forces the receiver to wait for a defined time ΔT before sending the sifting information to the emitter. In this way, after the receiver has detected the qubits, the sifting communication is delayed until the said detector is active again. During this delay, the delayed sifting data are stored in the buffer.

The imposed delay time is set to ensure that no communication of the sifting data takes place while one of the detectors is inactive.

In such a way, the key sifting is delayed, although the total communication's time and data rate are slightly affected.

The delay in the communication at the receiver's side can be achieved in different ways, which are all objects of the present invention.

In some embodiments of the present invention, the delay time can be imparted to the system by exploiting a buffer/memory connected to the processing unit at the receiver's side.

In some embodiments of the present invention, additionally to the buffer, the receiver is equipped with an interface, by which the user configures the amount of delay time. The introduced delay is typically ranging between 1 and 100 µs, and preferably 20 µs.

In some embodiment, the buffer may be embedded within the processing unit. In other embodiment, the buffer can be placed upstream to the sifting unit or downstream to the sifting unit, either within or outside the processing unit.

Without any restriction to the mentioned embodiments, the general solution consists in introducing a delay time in the data communication that is initiated by the receiver after the receipt of the data from the emitter.

For instance, a delay time in the order of ∼ 20 µs does not affect the data rate of the quantum safe communication, and indicates a typical value used for the buffer.

It is important to note that in a general manner, one wishes to accelerate QKD communication in order to quickly empty the memory of the receiver, therefore the use of a buffer, delaying the communication to enhance the security, is against the general opinion in QKD communication and is therefore unexpected in the art.

### Brief description of the drawings

Further particular advantages and features of the invention will become more apparent from the following non-limitative description of at least one embodiment of the invention which will refer to the accompanying drawings, wherein
- Figure 1 schematically illustrates a general QKD apparatus according to the prior art;
- Figure 2 schematically illustrates a general QKD Receiver apparatus according to the prior art;
- Figure 3 schematically illustrates a QKD Receiver apparatus according to a first embodiment of the present invention;
- Figure 4A to 4D schematically illustrate different examples of a QKD Receiver apparatus according to a preferred embodiment of the present invention;
- Figure 5 schematically illustrates a QKD method according to the present invention;
- Figure 6 schematically illustrates chronograms of two single photon detectors of a QKD system and of the behaviors of a QKD system based on the prior art and on the invention.

### Detailed description of the invention

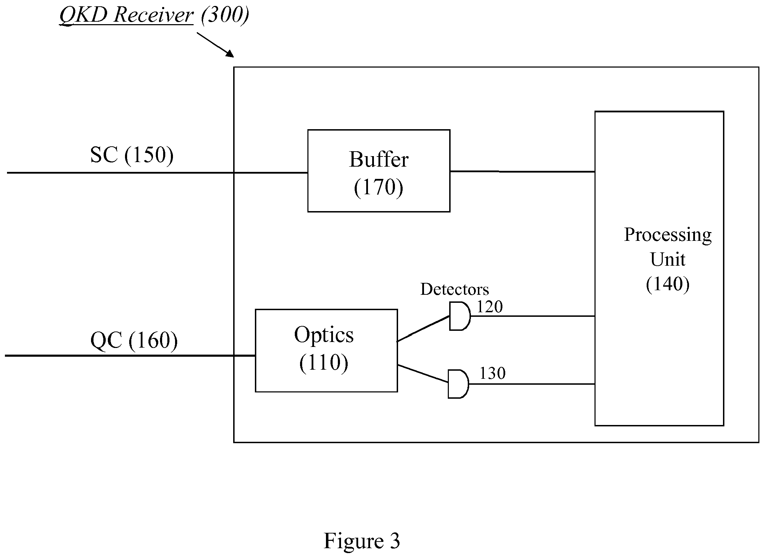

The present detailed description is intended to illustrate, based on figures 3 to 6, the invention in a non-limitative manner since any feature of an embodiment may be combined with any other feature of a different embodiment in an advantageous manner.

Figure 3 schematically illustrates a QKD receiver 300 according to the present invention.

The general structure of this QKD receiver 300 of the present invention comprises an optical system 110, at least two detectors 120, 130, a processing unit 140, and a buffer 170.

The buffer 170 is connected to the processing unit 140 and is adapted to temporarily store or delay an information, preferably sifting data, that the receiver 300 is about to send to the emitter 010 once one of its detector has detected at least one qubit sent by the emitter 010.

Therefore, the buffer 170 has the role of introducing a delay time into the communication. More particularly, when the receiver gets quantum data from the emitter, i.e. when it detects a qubit, for example, the buffer 170 is adapted to introduce a delay in the receiver 300's reply such that the receiver waits this delay time before sending back a notification of data' receipt, preferably sifting data, to the emitter 010. In this way, a potential eavesdropper 050 is notified of the detection only when all the detectors are active again.

The delay time is appropriately chosen on the basis of the ratio between the period of qubits emission and the deadtime of the detectors. In fact, if the period of emission is shorter than the detector's deadtime, some information about the inactive detector leaks to the eavesdropper, while by introducing an appropriate delay time in the communication such a problem is avoided. On the other hand, the delay time cannot be too long because a longer delay time means more data to store in the buffer and therefore a larger storing capacity (memory) in the buffer. The deadtime of the detectors depends on the particular technology implemented in the detector itself. It can range from 50 ns to 100 ms, and the delay time is chosen accordingly.

The buffer 170 is preferably placed between the processing unit 140 and the service channel 150 but could be embedded within the processing unit 140. Also, the buffer 170 is preferably placed after the processing unit 140, or after the sifting subunits if embedded within the processing unit. However, the contrary is also possible. The Service channel 150 is exploited to send back the notification of receipt to the emitter and all public communications.

The function of the buffer 170 is to assure that the sifting communication is delayed by at least the deadtime of all the detectors 120, 130, which in principle can be different from one detector 120 to the other detector 130. Consequently, the buffer 170 helps preventing the system from being exposed to a potential attack.

In some embodiments, the delay time introduced by the buffer 170 is configured into the buffer itself at the implementation time, for example by setting a specific data or an upper limit for example according to the deadtime of the detectors and the size of the buffer. Preferably, this delay time is appropriately set to match the deadtime of the particular implemented detectors.

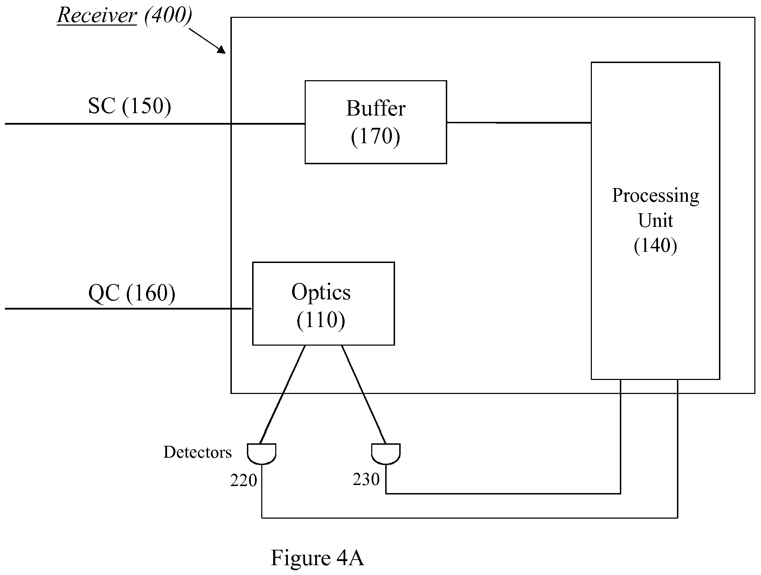

Alternatively, the delay time can be configured upon plugging at least one new external detector, preferably through an interface where the user inserts the deadtime of the detector or the like. This preferred embodiment is shown in figures 4A - 4D.

Figures 4A to 4D schematically illustrates a QKD Receiver apparatus according to a preferred embodiment of the present invention According to this preferred embodiment, the QKD receiver 400, 500, 600, 700 comprises an optical system 110, two external detectors 220, 230 a processing unit 140, a buffer 170, 270 and possibly an interface 200.

Figure 4A shows a first variant of the preferred embodiment of the invention similar to the previous embodiment 300 with the only difference that the detectors 220, 230 are external detectors. Everything which has been explained above therefore also applies here.

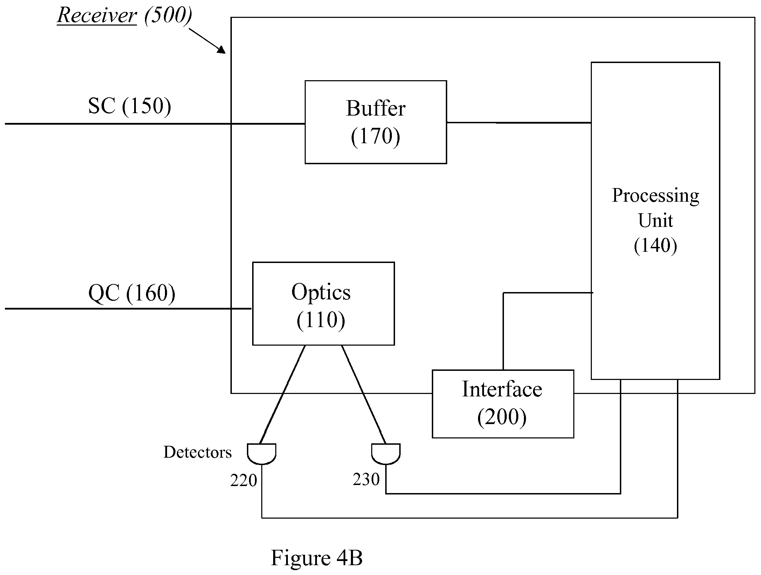

Figure 4B shows another variant where an interface 200 is connected to the processing unit 140 and permits an online selection of the delay time. More precisely, a user can select the delay to impose to the receiver 500 at run time. The interface may impose the delay time (ΔT) directly to the buffer or indirectly through the processing unit 140.

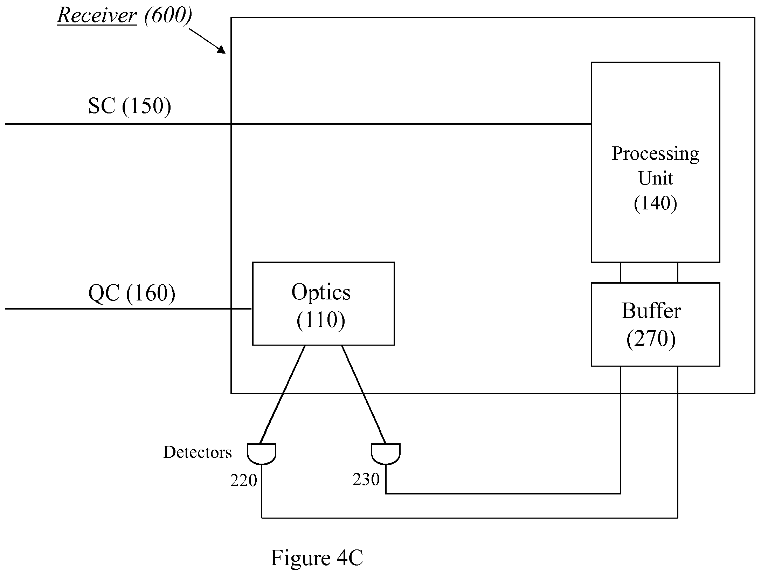

Figure 4C shows another variant where the buffer 270 is placed before the processing unit 140, i.e. before the sifting such that the detection signals are delayed.

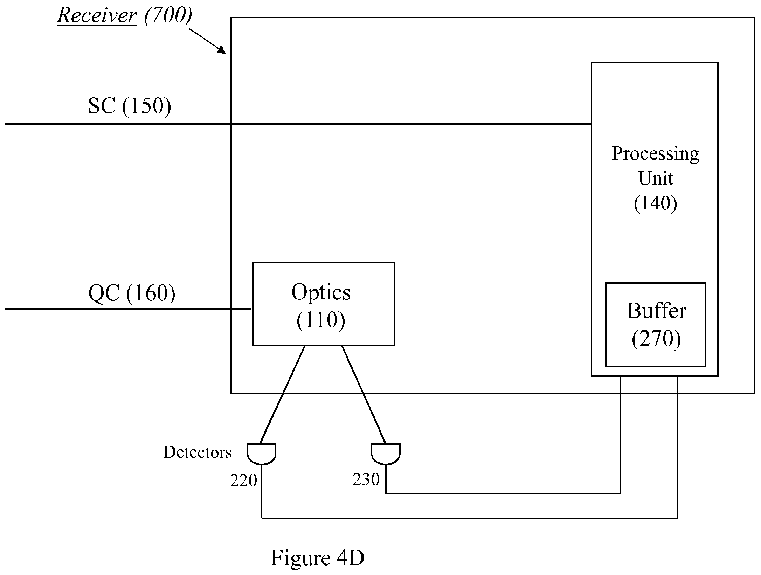

Finally, figure 4D shows another variant where the buffer 270 is embedded within the processing unit 140. In this case, the buffer can be placed either before or after the sifting subunit (not represented).

As mentioned before and repeated here, the buffer 170 has the role of introducing a delay time into the communication as in the above-described embodiment. In particular, when the receiver gets the quantum data from the emitter, it waits an additional time (in the range of ∼1-100 µs, preferably 20 µs) before sending back to the emitter a notification of receipt. This notification of receipt preferably consists in the sifting data.

In this way, the delay time can be easily tuned by the user depending on the characteristics of the detector and its proper dead time.

The buffer 170 is in charge of temporarily storing or delaying information, preferably sifting data, retransmitted by the receiver 100 (the processing unit) to the emitter 010 after the detection of a qubit. The information will be temporarily stored until the delay time has elapsed, then the buffer 170 releases the data, preferably sifting data, through the service channel 150.

The buffer 170 assures that the communication is delayed by at least the dead time duration. This is decided by the user through the interface 200 at run time.

In this way, the communication is always secure and is not threated by the dead time of the detectors.

This preferred embodiment differs from the general description above in that the receiver 400-700 shows two external detectors placed outside the box of the receiver itself.

As for previous embodiments, the buffer delays the information to be sent back to the emitter and waits delay-time before sending the notification of receipt through the service channel 150.

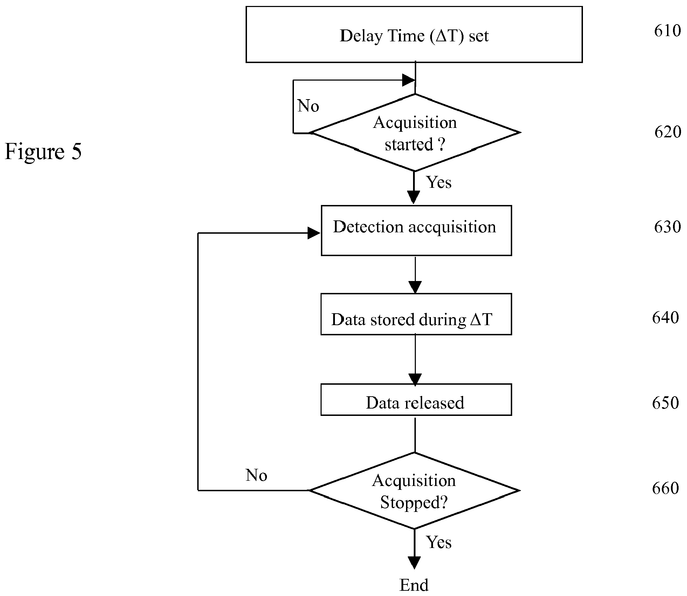

Figure 5 schematically illustrates a QKD operating method according to the present invention. The operating method shows the operating steps of the QKD receiver, necessary to securely communicate with the emitter.

As a countermeasure against the detectors' deadtime effect, a buffer is introduced into the QKD receiver. At start time 610, the delay-time ΔT of the buffer is defined, and the QKD system waits the start of the qubit acquisition process 620.

Once one of the detectors acquires a detection 630, (a qubit sent through the quantum channel), the sifting process is carried out and the buffer receives and temporarily stores 640 sifting data from the processing unit during the delay time. Alternatively, if the buffer is installed upstream the processing unit, this buffer stores the detection signals before the sifting process.

After the delay time has elapsed 650, the buffer releases the stored data or signals and let them go either through the service channel 150 or to the processing unit 140.

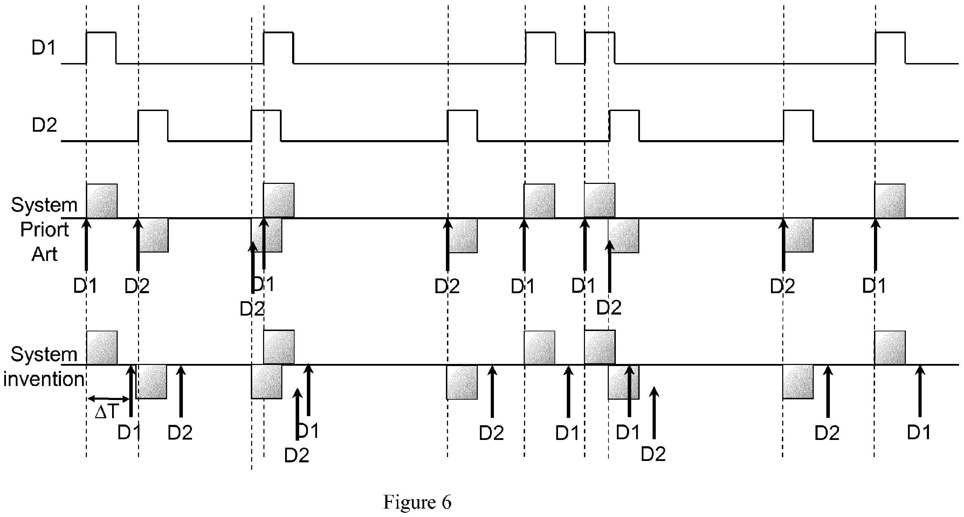

Figure 6 schematically illustrates four chronograms that demonstrate the behavior of a QKD system with at least two single photon detectors that can be inactive in an uncorrelated manner. The two first chronograms show a typical sequence of activation and inactivation of both detectors (D1 and D2). When the chronogram is in the low level, this means that the detector is active. The transition from low to high level corresponds to a qubit detection. The chronogram stays in the high level while the detector is still inactive. As can be seen on these two first chronograms, detections of D1 and D2 are not correlated. Therefore, those two detectors can be inactive in a uncorrelated manner.

The third chronogram shows the behavior of a QKD system from prior art. The grey squares represent the time periods when detectors D1 (above the line) and D2 (below the line) are inactive. The vertical black arrows show when the sifting information is sent by the receiver (100) through the service channel (150). In this third chronogram, we can see that the sifting information is sent when the detector that detected the sifted qubit is still inactive. This situation can give opportunities to the eavesdropper for performing specific attacks not considered in the QKD security proofs.

The fourth chronogram shows the behavior of a QKD system with our invention. As can be seen, the sifting information is delayed compare to the time of the detection by a delay ΔT. If ΔT is longer than the deadtime duration, this avoids the situation where the sifting information is sent whereas the detector that detected the sifted qubit is still inactive.

While the above invention has been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This is for example particularly the case regarding the exact number of detectors used, the delay to be introduced or the hardware which can be used as long as it achieves the present invention.

## Claims

1. QKD receiver (300-700) for connection to a service channel (150) and a quantum channel (160), and comprising an optical system (110), at least two detectors (120, 130, 220 230), a processing unit (140) and a buffer (170, 270), **characterized in that** the buffer (170, 270) is adapted to temporarily store an information that the receiver (300-700) sends back to the emitter via the said service channel once one of the said detectors receives quantum data from the said quantum channel, so as to introduce a delay time into the communication process to assure that the sifting data is sent through the said service channel after a time duration of at least the deadtime of the said detectors (120, 130, 220, 230).

2. QKD receiver according to claim 1, **characterized in that** the buffer (170) is placed between the processing unit (140) and the service channel (150).

3. QKD receiver according to claim 1 or 2, **characterized in that** the buffer (170) is embedded within the processing unit (140).

4. QKD receiver according to any one of claims 1 to 3, **characterized in that** the delay time is in the range of 1-100 µs, preferably 20 µs.

5. QKD receiver according to any one of claims 1 to 4, **characterized in that** the at least two detectors (220, 230) are external detectors placed outside the box of the receiver (500-700) itself.

6. QKD receiver according to claim 5, **characterized in that** it further comprises an interface (200) connected to the processing unit (140) and permitting an online selection of the delay time at run time.

7. QKD receiver according to any one of claims 1 to 6, **characterized in that** the buffer temporarily and exclusively stores sifting data.

8. QKD apparatus comprising an emitter, a service channel, a quantum channel and the QKD receiver according to any one of claims 1 to 7.

9. QKD apparatus according to claim 8, **characterized in that** the receiver further comprises a processing unit (140) and the buffer (170) is connected to the processing unit.

10. QKD System comprising the QKD apparatus of claim 9.

11. QKD operating method carried out in the QKD System of claim 10, comprising the steps of:
defining the delay-time (ΔT) of the buffer at start time (610) waiting for the start of the qubit acquisition process (620),
acquiring the detection of quantum data on at least one of the detectors (630) temporarily storing data in the buffer (640) during the delay time,
after the delay time has elapsed (650), releasing the sifting data through the service channel (150).
